# EUROPEAN PATENT APPLICATION

(11) **EP 4 597 938 A1**
(43) Date of publication of application: **06.08.2025**
(21) Application number: 22959750.5
(22) Date of filing: 26.09.2022
(51) Int. Cl.: H04L 27/00

(54) **MIGRATION METHOD AND APPARATUS**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/121409
(87) International publication number: WO 2024/065098

(57) **Abstract**

Embodiments of the present disclosure disclose a migration method and apparatus, which can be applied to the technical field of communications. The method executed by an IAB-donor comprises: before migrations of an integrated access and backhaul relay node (IAB-node) are executed, determining information of migrations having been executed by the IAB-node; in response to the IAB-node having executed some migrations at least once, acquiring first migration information associated with the IAB-node; and executing the migrations of the IAB-node according to the first migration information. Thus, before executing multiple migrations on the IAB-node consecutively, first migration information associated with the IAB-node is determined first, and then multiple consecutive migrations of the IAB-node can be reliably achieved on the basis of the first migration information.

## Description

### TECHNICAL FIELD

The disclosure relates to the field of communication technology, in particular to a migration method and an apparatus.

### BACKGROUND

Integrated access and backhaul (IAB) supports wireless access and backhaul for millimeter wave network devices, which can effectively reduce the demand for new optical fiber deployment when deploying dense networks, thereby making wireless relay in the next generation (NG) radio access network (RAN) possible. The relay node is called IAB-node, which supports the wireless access and backhaul through new radio (NR). The terminating node of network-side NR backhaul is called IAB-donor, which is a network device with IAB functions. The NG RAN is wirelessly connected to the IAB-donor that can serve the IAB-node through the IAB-node to support the IAB.

As the IAB-node moves and changes, an IAB-node migration process needs to be performed. How to perform migration of IAB-node for multiple times is a problem that needs to be solved urgently.

### SUMMARY

Embodiments of the disclosure provide a migration method and an apparatus. Before performing multiple migrations of an IAB-node continuously, if at least one partial migration has been performed, its associated first migration information may be determined first, and then multiple continuous migrations may be performed based on the first migration information.

According to a first aspect of embodiments of the disclosure, a migration method is provided. The method is performed by an IAB-donor, and includes: before performing an IAB-node migration, determining information of a migration that has been performed by an IAB-node; in response to that the IAB-node has performed at least one partial migration, obtaining first migration information associated with the IAB-node; and performing the IAB-node migration according to the first migration information.

In the disclosure, before performing the IAB-node migration, the IAB-donor first determines the information of the migration that has been performed by the IAB-node. When it is determined that at least one partial migration has been performed by the IAB-node, it may first obtain the first migration information associated with the IAB-node, and then perform the migration on the IAB-node based on the first migration information. Therefore, multiple continuous migrations of the IAB-node may be realized reliably.

According to a second aspect of embodiments of the disclosure, a migration method is provided. The method is performed by an IAB-node, and includes: before performing an IAB-node migration, determining information of a migration that has been performed by the IAB-node; and in response to that at least one partial migration has been performed, sending first migration information to an F1 terminating IAB-donor, to enable the F1 terminating IAB-donor to perform the IAB-node migration according to the first migration information.

According to a third aspect of embodiments of the disclosure, a migration method is provided. The method is performed by an IAB-donor, and includes: before performing an IAB-node migration, determining information of a migration that has been performed by an IAB-node; and in response to that the IAB-node has performed at least one partial migration, sending first migration information to a target IAB-donor, to enable the target IAB-donor to perform the IAB-node migration according to the first migration information.

According to a fourth aspect of embodiments of the disclosure, an IAB-donor is provided. The IAB-donor includes:
a processing module, configured to, before performing IAB-node migration, determine information of a migration that has been performed by an IAB-node;
a transceiver module, configured to, in response to that the IAB-node has performed at least one partial migration, obtain first migration information associated with the IAB-node; and
in which the processing module is further configured to perform the IAB-node migration according to the first migration information.

According to a fifth aspect of embodiments of the disclosure, an IAB-node is provided. The IAB-node includes:
a processing module, configured to, before performing an IAB-node migration, determine information of a migration that has been performed; and
a transceiver module, configured to, in response to that at least one partial migration has been performed, send first migration information to an F1 terminating IAB-donor, to enable the F1 terminating IAB-donor to perform the IAB-node migration according to the first migration information.

According to a sixth aspect of embodiments of the disclosure, a source non-F1 terminating IAB-donor is provided. The source non-F1 terminating IAB-donor includes:
a processing module, configured to, before performing an IAB-node migration, determine information of a migration that has been performed by an IAB-node; and
a transceiver module, configured to, in response to that the IAB-node has performed at least one partial migration, send first migration information to a target IAB-donor, to enable the target IAB-donor to perform the IAB-node migration according to the first migration information.

According to a seventh aspect of embodiments of the disclosure, a communication apparatus is provided. The communication apparatus includes: a processor. When the processor calls computer programs stored in a memory, the method described in the first aspect above is implemented.

According to an eighth aspect of embodiments of the disclosure, a communication apparatus is provided. The communication apparatus includes: a processor. When the processor calls computer programs stored in a memory, the method described in the second aspect above is implemented.

According to a ninth aspect of embodiments of the disclosure, a communication apparatus is provided. The communication apparatus includes: a processor. When the processor calls computer programs stored in a memory, the method described in the third aspect above is implemented.

According to a tenth aspect of embodiments of the disclosure, a communication apparatus is provided. The communication apparatus includes: a processor and a memory having computer programs stored thereon. When the processor executes the computer programs stored in the memory, the communication apparatus is caused to implement the method described in the first aspect above.

According to an eleventh aspect of embodiments of the disclosure, a communication apparatus is provided. The communication apparatus includes: a processor and a memory having computer programs stored thereon. When the processor executes the computer programs stored in the memory, the communication apparatus is caused to implement the method described in the second aspect above.

According to a twelfth aspect of embodiments of the disclosure, a communication apparatus is provided. The communication apparatus includes: a processor and a memory having computer programs stored thereon. When the processor executes the computer programs stored in the memory, the communication apparatus is caused to implement the method described in the third aspect above.

According to a thirteenth aspect of embodiments of the disclosure, a communication apparatus is provided. The communication apparatus includes: a processor and an interface circuit. The interface circuit is used for receiving code instructions and transmitting the code instructions to the processor, and the processor is configured for running the code instructions to cause the apparatus to perform the method described in the first aspect.

According to a fourteenth aspect of embodiments of the disclosure, a communication apparatus is provided. The communication apparatus includes: a processor and an interface circuit. The interface circuit is used for receiving code instructions and transmitting the code instructions to the processor, and the processor is configured for running the code instructions to cause the apparatus to perform the method described in the second aspect.

According to a fifteenth aspect of embodiments of the disclosure, a communication apparatus is provided. The communication apparatus includes: a processor and an interface circuit. The interface circuit is used for receiving code instructions and transmitting the code instructions to the processor, and the processor is configured for running the code instructions to cause the apparatus to perform the method described in the third aspect.

According to a sixteenth aspect of embodiments of the disclosure, a communication system is provided. The system includes the IAB-donor described in the fourth aspect, the IAB-node described in the fifth aspect and the source non-F1 terminating IAB-donor described in the sixth aspect. Or, the system includes the communication apparatus described in the seventh aspect, the communication apparatus described in the eighth aspect and the communication apparatus described in the ninth aspect. Or, the system includes the communication apparatus described in the tenth aspect, the communication apparatus described in the eleventh aspect and the communication apparatus described in the twelfth aspect. Or, the system includes the communication apparatus described in the thirteenth aspect, the communication apparatus described in the fourteenth aspect and the communication apparatus described in the fifteenth aspect.

According to a seventeenth aspect of embodiments of the disclosure, a computer-readable storage medium for storing instructions for the above terminal is provided. When the instructions are executed, the terminal is caused to perform the method described in the first aspect.

According to an eighteenth aspect of embodiments of the disclosure, a computer-readable storage medium for storing instructions for the above terminal is provided. When the instructions are executed, the terminal is caused to perform the method described in the second aspect.

According to a nineteenth aspect of embodiments of the disclosure, a computer-readable storage medium for storing instructions for the above terminal is provided. When the instructions are executed, the terminal is caused to perform the method described in the third aspect.

According to a twentieth aspect of embodiments of the disclosure, a computer program product including a computer program is provided. When the computer program is running on a computer, the computer is caused to perform the method described in the first aspect above.

According to a twenty-first aspect of embodiments of the disclosure, a computer program product including a computer program is provided. When the computer program is running on a computer, the computer is caused to perform the method described in the second aspect above.

According to a twenty-second aspect of embodiments of the disclosure, a computer program product including a computer program is provided. When the computer program is running on a computer, the computer is caused to perform the method described in the third aspect above.

According to a twenty-third aspect of embodiments of the disclosure, a chip system is provided. The chip system includes at least one processor and an interface, for supporting the terminal in realizing the functions involved in the first aspect, e.g., determining or processing at least one of data and information involved in the method described above. In a possible design, the chip system further includes a memory, which is configured to store necessary computer programs and data for the terminal. The chip system may consist of chips or may include a chip and other discrete components.

According to a twenty-fourth aspect of embodiments of the disclosure, a chip system is provided. The chip system includes at least one processor and an interface, for supporting the network device in realizing the functions involved in the second aspect, e.g., determining or processing at least one of data and information involved in the method described above. In a possible design, the chip system further includes a memory, which is configured to store necessary computer programs and data for the network device. The chip system may consist of chips or may include a chip and other discrete components.

According to a twenty-fifth aspect of embodiments of the disclosure, a chip system is provided. The chip system includes at least one processor and an interface, for supporting the network device in realizing the functions involved in the second aspect, e.g., determining or processing at least one of data and information involved in the method described above. In a possible design, the chip system further includes a memory, which is configured to store necessary computer programs and data for the network device. The chip system may consist of chips or may include a chip and other discrete components.

According to a twenty-sixth aspect of the disclosure, a computer program is provided. When the computer program is running on a computer, the computer is caused to perform the method described in the first aspect above.

According to a twenty-seventh aspect of the disclosure, a computer program is provided. When the computer program is running on a computer, the computer is caused to perform the method described in the second aspect above.

According to a twenty-eighth aspect of the disclosure, a computer program is provided. When the computer program is running on a computer, the computer is caused to perform the method described in the third aspect above.

### BRIEF DESCRIPTION OF THE DRAWINGS

In order to clearly illustrate technical solutions of embodiments of the disclosure or background technologies, a description of drawings used in the embodiments of the disclosure or the background technologies is given below.
FIG. 1 is a schematic diagram of a backhaul link after an IAB-node performing one partial migration.
FIG. 2 is a schematic diagram of a communication system according to an embodiment of the disclosure.
FIG. 3 is a process schematic diagram of a user equipment (UE) performing two continuous migration according to an embodiment of the disclosure.
FIG. 4 is a flowchart of a migration method according to an embodiment of the disclosure.
FIG. 5 is a flowchart of a migration method according to another embodiment of the disclosure.
FIG. 6 is a flowchart of a migration method according to another embodiment of the disclosure.
FIG. 7 is a flowchart of a migration method according to another embodiment of the disclosure.
FIG. 8 is a flowchart of a migration method according to another embodiment of the disclosure.
FIG. 9 is an interaction schematic diagram of a migration method according to an embodiment of the disclosure.
FIG. 10 is an interaction schematic diagram of a migration method according to another embodiment of the disclosure.
FIG. 11 is a schematic diagram of a communication apparatus according to an embodiment of the disclosure.
FIG. 12 is a schematic diagram of a communication apparatus according to another embodiment of the disclosure.
FIG. 13 is a schematic diagram of a chip according to an embodiment of the disclosure.

### DETAILED DESCRIPTION

In order to facilitate understanding, the terms involved in this disclosure are first introduced.

### 1. Integrated access and backhaul (IAB)-node

The IAB-node, a relay node of IAB, supports wireless access and backhaul through new radio (NR). The IAB-node connects to upstream IAB-nodes or IAB-donor distributed units (DUs) through a terminal function subset (which is called an IAB mobile termination (MT) function in the IAB-node) of a NR Uu interface. The IAB-node provides wireless backhaul to downstream IAB-nodes and user equipments (UEs) through a network function (which is called an IAB-DU function of the IAB-node) of the NR Uu interface. That is, one IAB-donor may be regarded as consisting of one IAB-MT and at least one IAB-DU.

### 2. IAB-donor

A terminating node of network-side NR backhaul is called the IAB-donor, which is a network device with IAB functions. The IAB-donor includes one IAB-donor central unit (CU) and one or more IAB-donor-DUs.

A control plane (F1 C) traffic of a FI interface between the IAB-node and the IAB-donor-CU is backhauled via the IAB-donor-DU and an optional intermediate hop IAB-node. A user plane (F1 U) traffic of the F1 interface between the IAB-node and the IAB-donor-CU is backhauled via the IAB-donor-DU and the optional intermediate hop IAB-node.

### 3. IAB-node migration

In scenarios that support IAB-node movement, such as an in-vehicle mobile IAB node, as the IAB-node moves and changes, it is necessary to perform an IAB-node migration process. The migration process includes two types: partial migration and full migration.

Partial migration means that only the IAB-MT on the IAB-node is migrated (or switched) to a new IAB-donor, while the IAB-DU on the IAB-node still remains connected with the original IAB-donor, which means the UE context on the IAB-DU is also saved on the original IAB-donor. Full migration refers to that the IAB-MT on the IAB-node is migrated (or switched) to a new IAB-donor, and the IAB-DU on the IAB-node is also migrated (or switched) to a new IAB-donor. Due to after the full migration, the IAB-node all accesses to a new IAB-donor, and a terminal (hereinafter referred to as UE) connected with the IAB-donor through the IAB-node will also access to the new IAB-donor. Therefore, the full migration may also be called a UE migration.

### 4. F1 terminating IAB-donor

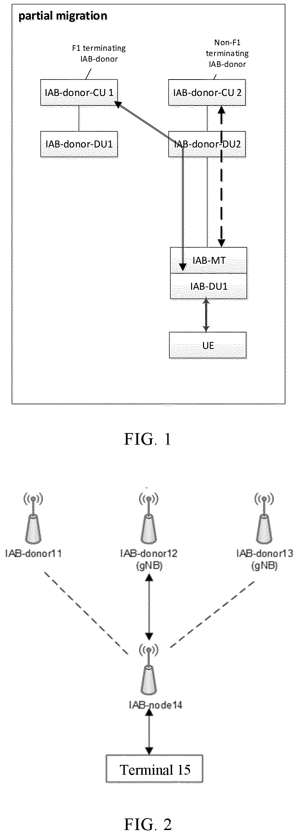

The IAB-donor to which a CU connected to F1 is located, which refers to the IAB-donor connected to the IAB-DU and all the UEs served by the IAB-DU, and is called the F1-terminating IAB-donor. FIG. 1 is a schematic diagram of a backhaul link after an IAB-node performing one partial migration. As illustrated in FIG. 1, an IAB-donor-CU1 is a donor that originally serves the IAB-node (an IAB-MT and an IAB-DU1 in FIG. 1). After performing one partial migration, the IAB-donor-CU1 may be called the F1 terminating IAB-donor. After the IAB-MT switching, identification (ID) information of the previous IAB-donor before the switching will be reserved. At this time, UE data will be transmitted with the IAB-donor-CU1 through F1 connection (only data routing will pass through an IAB-donor DU2), that is, UE context is saved on the F1-terminating IAB-donor. The IAB-MT has switched to the IAB-donor-CU2, and data of the IAB-MT is transmitted through the IAB-donor-CU2, which is called a non-F1 terminating IAB-donor.

It should be noted that the name of the F1 terminating IAB-donor in the disclosure (i.e., the IAB-donor connected to the IAB-DU and all the UEs served by the IAB-DU) may be different in different migration scenarios, such as a source IAB-donor, an anchor, an IAB-donor and a master IAB-donor.

A non-F1 terminating IAB-donor refers to a donor connected by the IAB-MT after a partial migration of the IAB-node. A source non-F1 terminating IAB-donor is a donor connected by the IAB-MT when the IAB-node performs a new partial migration or full migration. In addition, a target IAB-donor, i.e. a target IAB-donor to which the IAB-MT is switched during the migration process, may also be called a target non-F1 terminating IAB-donor and so on.

The purpose of this disclosure is to explain how to perform a re-migration of the IAB-node after a partial migration. Any scheme that is the same as or similar to the migration method provided in this disclosure, but has different names for the donors connected to the IAB-DU and all the UEs served by the IAB-DU, and the target IAB-donor to which the IAB-MT is switched during the migration process, belongs to the scope of this disclosure.

It should be understood that although the terms "first", "second", and "third" may be used in the embodiments of the disclosure to describe various information, the information should not be limited to these terms. These terms are only used to distinguish the same type of information from each other. For example, without departing from the scope of embodiments of the disclosure, the first information may also be referred to as the second information, and similarly, the second information may also be referred to as the first information. Depending on the context, the term "in response to" as used herein may be interpreted as "when", "while" or "if". For the purpose of simplicity and ease of understanding, the terms "greater than", "less than", "higher than" and "lower than" are used in the disclosure to represent size relations. However, it may be understood by those skilled in the art that the term "greater than" also covers the meaning of "greater than or equal to", and "less than" also covers the meaning of "less than or equal to". The term "higher than" covers the meaning of "higher than or equal to", and the term "less than" covers the meaning of "less than or equal to".

In order to better understand a migration method disclosed by the embodiments of the disclosure, a communication system to which the embodiments of the disclosure are applied will be described below.

As illustrated in FIG. 2, FIG. 2 is a schematic diagram of a communication system according to an embodiment of the disclosure. The communication system may include, but is not limited to, one IAB-donor, one IAB-node and one UE. The number and form of devices shown in FIG. 2 are only used as an example, and do not constitute as a limitation on the embodiments of the disclosure. In practical application, two or more IAB-donors and two or more IAB-donors may be included. The communication system shown in FIG. 2 includes three IAB-donors, i.e., an IAB-donor 11, an IAB-donor 12, and an IAB-donor 13, further includes one IAB-node 14 and one terminal 15.

It should be noted that the technical solutions of the embodiments of the disclosure may be used in various communication systems, such as, a long term evolution (LTE) system, a 5th generation (5G) mobile communication system, a 5G new radio (NR) system, or other future new mobile communication systems.

The IAB-donor in the embodiment of the disclosure is an entity on a network side with IAB functions for transmitting or receiving signals. For example, the IAB-donor may be an evolved NodeB (eNB) with IAB functions, a transmission reception point (TRP) with IAB functions, a next generation NodeB (gNB) with IAB functions in a NR system, a base station with IAB functions in other future mobile communication systems or an access node in a wireless fidelity (WiFi) system, etc. The specific technology and specific device form adopted by the IAB - donor are not limited in the embodiments of the disclosure. The IAB-donor provided by the embodiments of the disclosure may be composed of a CU and a DU. The CU may also be called a control unit. The use of CU-DU structure allows a protocol layer of the network device, such as a base station, to be split, some functions of the protocol layer are placed in the CU for centralized control, and some or all of the remaining functions of the protocol layer are distributed in the DU, which is intensively controlled by the CU.

The IAB-node in the embodiment of the disclosure is a relay node that provides wireless backhaul for downstream IAB-nodes and UEs.

The terminal 15 in the embodiment of the disclosure is an entity on a user side for receiving or transmitting signals, such as a cellular phone. The terminal may also be referred to as a terminal, a UE, a mobile station (MS), a mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiment of the disclosure.

It is understood that the communication system described in the embodiment of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new business scenarios emerge, the technical solutions provided by the embodiments of the disclosure are also applicable to similar technical problems.

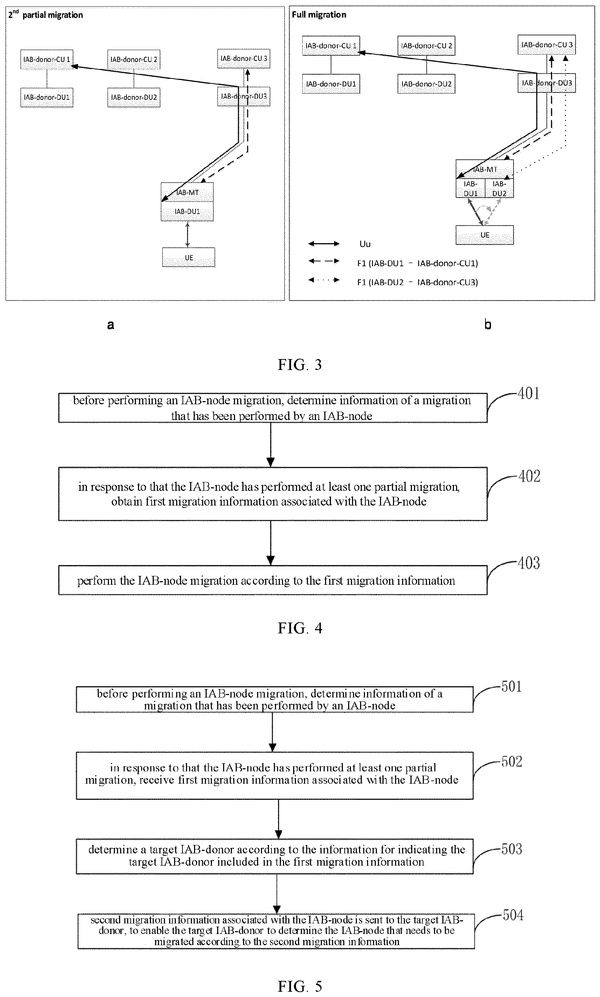

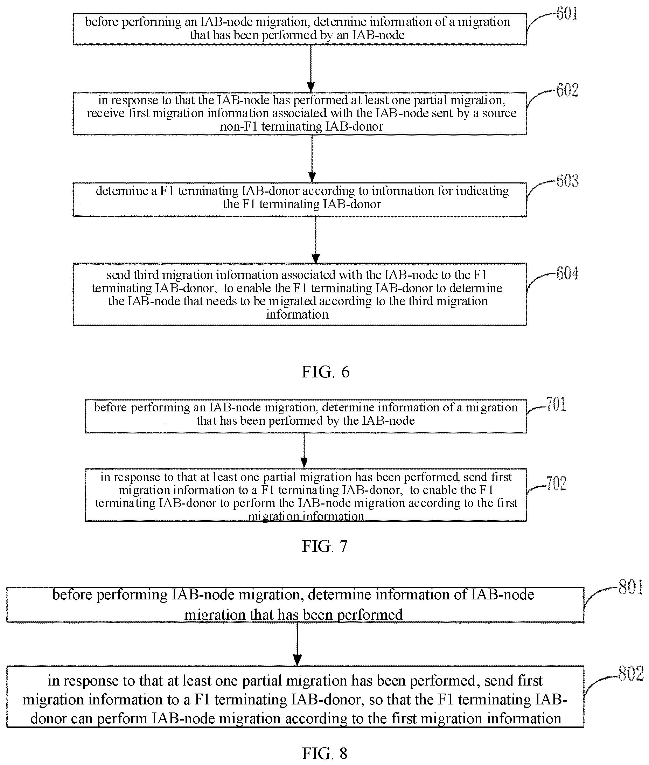

In the system, the F1 terminating IAB-donor may realize the method shown in any of the embodiments of FIGS. 4-5 of the disclosure, the target IAB-donor may realize the method shown in the embodiment of FIG. 4 or 6 of this disclosure, the IAB-node may realize the method shown in the embodiment of FIG. 7 of this disclosure, and the source non-F1 terminating IAB-donor may realize the method shown in the embodiment of FIG. 8 of this disclosure.

It is understood that the communication system described in the embodiment of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new business scenarios emerge, the technical solutions provided by the embodiments of the disclosure are also applicable to similar technical problems.

FIG. 3 is a process schematic diagram of a UE performing two continuous migration according to an embodiment of the disclosure. Generally, a mobile IAB-node may undergo a plurality of partial migrations. As illustrated in FIG. 3a, after an IAB-node undergoing one partial migration, the F1-terminating IAB-donor is an IAB-donor 1, and the non-F1 terminating IAB-donor is an IAB-donor 2. After the IAB-MT switching, ID information of the previous IAB-donor before the switching will be reserved. At this time, an IAB-donor-DU2 may reliably route UE data to an IAB-donor-CU1 through F1 connection. As the IAB-node moves, if the IAB-node performs another partial migration (2nd partial migration), i.e., the IAB-MT switches to an IAB-donor-CU3 (which may be called a target IAB-donor or target non-F1 terminating IAB-donor). At this time, it is necessary to establish a route from the IAB-donor-CU1 to an IAB-DU1 through an IAB-donor-DU3, and the reserved ID information before the switching is the IAB-donor2. Therefore, it is necessary to determine how to establish the route from the IAB-donor-CU1 to the IAB-DU1 through the IAB-donor-DU3.

As illustrated in FIG. 3b, after undergoing one partial migration, if the IAB-node performs a full migration, the IAB-node needs to set another logical IAB-DU2, and establish an F1 connection between the IAB-DU2 and the IAB-donor-CU3. The IAB-DU2 provides a logical cell different from the IAB-DU1. When performing UE migration, the IAB-donor-CU1 needs to interact with the IAB-donor-CU3 to perform the UE migration/switching, i.e. the UE requires to switch from a source cell under the IAB-DU1 under the IAB-donor-CU1 to a target cell under the IAB-DU2 under the IAB-donor-CU3, and thus it is necessary to determine how to implement an information interaction between the IAB-donor-CU1 and the IAB-donor-CU3.

In the above two scenarios, after the IAB-node undergoing at least one partial migration, a full migration or a partial migration may be further performed, which needs to perform the information interaction between the source IAB-donor and the target IAB-donor. By using the migration method provided in the disclosure, the information interaction may be achieved between the source IAB-donor and the target IAB-donor, thereby providing conditions for realizing a plurality of migrations of the IAB-node.

The migration method according to the embodiments of the disclosure is described in detail below in combination with various flowcharts.

As illustrated in FIG. 4, FIG. 4 is a flowchart of a migration method according to an embodiment of the disclosure. The method is performed by an IAB-donor. As illustrated in FIG. 4, the method may include but is not limited to the following steps.

At step 401, before performing an IAB-node migration, information of a migration that has been performed by an IAB-node is determined.

Optionally, the IAB-donor in the disclosure may be an F1 terminating IAB-donor or a target IAB-donor. That is, during the IAB-node migration, the F1 terminating IAB-donor or the target IAB-donor may realize a reliable migration of the IAB-node by performing the migration method according to the disclosure.

The information of the migration that has been performed by the the IAB-node may at least include a number of migrations having been performed by the IAB-node and/or a type of migration having been performed. For example, the information of the migration that has been performed by the IAB-node may be that the IAB-node has performed one partial migration, or the IAB-node has performed one full migration, etc., which is not limited in the disclosure.

At step 402, in response to that the IAB-node has performed at least one partial migration, first migration information associated with the IAB-node is obtained.

In detail, when at least one partial migration has been performed by the IAB-node, it is necessary for performing an information interaction between the F1 terminating IAB-donor and the target IAB-donor when performing a new migration. However, at this time, the F1 terminating IAB-donor and the target IAB-donor do not know each other's ID and information. Therefore, in this disclosure, when the IAB-donor determines that one partial migration has been completed by the IAB-node, the IAB-donor may first obtain the first migration information associated with the IAB-node.

Optionally, the first migration information associated with the IAB-node may include information for indicating a target IAB-donor. The information for indicating a target IAB-donor may include at least one of:
a global next generation radio access network (NG-RAN) node ID of the target IAB-donor, which, for example, may be a global NG-RAN node ID of the target IAB-donor, including a public land mobile network (PLMN) ID and a gNB ID, which is not limited in the disclosure;
an ID of a cell serving an IAB-MT in the target IAB-donor, which, for example, may be a physical cell identity (PCI) and/or a cell global identity (CGI), which is not limited in the disclosure; or
a transport layer address of the target IAB-donor, which, for example, may be an internet protocol (IP) address and/or a tunnel endpoint ID (TEID), which is not limited in the disclosure.

Therefore, the F1 terminating IAB-donor may determine the target IAB-donor according to the first migration information, and then performs the information interaction with the target IAB-donor to complete the reliable migration of the IAB-node.

Optionally, the first migration information associated with the IAB-node may also include information for indicating the F1 terminating IAB-donor, which may include at least one of the following information:
an ID of a NG-RAN node served by the F1 terminating IAB-donor, which, for example, may be a global NG-RAN node ID of the F1 terminating IAB-donor, including a PLMN ID and a gNB ID, which is not limited in the disclosure;
a cell ID of an IAB-DU in the F1 terminating IAB-donor, which, for example, may be a PCI and/or a CGI, which is not limited in the disclosure; or
a transport layer address of the F1 terminating IAB-donor, which, for example, may be an IP address and/or a TEID, which is not limited in the disclosure.

Therefore, the target IAB-donor may determine the F1 terminating IAB-donor according to the first migration information, and performs the information interaction with the F1 terminating IAB-donor to complete the reliable migration of the IAB-node.

Optionally, the first migration information associated with the IAB-node may also include ID information of an IAB-MT. Therefore, the F1 terminating IAB-donor or the target IAB-donor may determine the IAB-node which needs to be migrated according to the ID information of the IAB-MT, and then complete the migration of the IAB-node.

Optionally, the ID information of the IAB-MT includes at least one of: ID information of the IAB-MT on the F1 terminating IAB-donor; ID information of the IAB-MT on the target IAB-donor; a context ID of the IAB-MT; ID information of the IAB-MT on a core network; or an ID of the IAB-MT.

It should be noted that when the first migration information is obtained by the F1 terminating IAB-donor, the ID information of the IAB-MT may be the ID information of the IAB-MT on the F1 terminating IAB-donor, which may uniquely identify the ID of the IAB-MT on the target IAB-donor, such as a target IAB-donor UE XnAP ID. Correspondingly, when the first migration information is obtained by the target IAB-donor, the ID information of the IAB-MT may be he ID information of the IAB-MT on the F1 terminating IAB-donor, which may uniquely identify the ID of the IAB-MT on the F1 terminating IAB-donor, such as an F1 terminating IAB-donor UE XnAP ID.

The context ID of the IAB-MT may be a connected-radio network temporary identity (C-RNTI).

The ID information of the IAB-MT on the core network may be a global unique temporary identifier (GUTI) corresponding to the IAB-MT, or a link ID corresponding to the IAB-MT, which is not limited in the disclosure.

In addition, since one IAB-node contains one IAB-MT, the ID information of the IAB-MT may also be the ID of the corresponding IAB-node, which is not limited in the disclosure.

Optionally, when the first migration information is obtained by the target IAB-donor, the first migration information may also include indication information for indicating that the first migration information is from a non-F1 terminating IAB-donor.

At step 403, the IAB-node migration is performed according to the first migration information.

Optionally, performing the IAB-node migration may include performing a partial migration of the IAB-node or performing a full migration of the IAB-node. For example, transport migration management (partial migration) of this IAB-node is performed between the target IAB-Donor and the F1 terminating IAB-donor, or a transfer migration (i.e., full migration) is performed between the target IAB-Donor and the F1 terminating IAB-donor.

It should be noted that when the full migration is currently being performed by the IAB-node, then when a new partial migration or full migration is to be performed after the full migration, because there is only one IAB-donor serving the IAB-node currently, it is only necessary to implement the information interaction between the IAB-donors before and after the migration, so that the migration may be directly performed.

In the disclosure, before performing the IAB-node migration, the IAB-donor first determines the information of the migration that has been performed by the IAB-node. When it is determined that at least one partial migration has been performed by the IAB-node, it may first obtain the first migration information associated with the IAB-node, and then perform the migration on the IAB-node based on the first migration information. Therefore, multiple continuous migrations of the IAB-node may be realized reliably.

FIG. 5 is a flowchart of a migration method according to another embodiment of the disclosure. The method is performed by an F1 terminating IAB-donor. As illustrated in FIG. 5, the method may include, but is not limited to, the following steps.

At step 501, before performing an IAB-node migration, information of a migration that has been performed by an IAB-node is determined.

The specific implementation process of step 501 may be referred to the detailed description of any embodiment of the disclosure, which is not repeated here.

At step 502, in response to that the IAB-node has performed at least one partial migration, first migration information associated with the IAB-node is received from the IAB-node.

Optionally, the first migration information may include information for indicating a target IAB-donor. The implementation form of information that may be used to indicate the target IAB-donor may refer to the detailed description of any embodiment of the disclosure, which is not repeated here.

Optionally, the first migration information may also include ID information of an IAB-MT. Therefore, the F1 terminating IAB-donor may determine the IAB-node to be migrated according to the ID information of the IAB-MT.

The ID information of the IAB-MT may include at least one of: ID information of the IAB-MT on an F1 terminating IAB-donor; ID information of the IAB-MT on a target IAB-donor; a context ID of the IAB-MT; ID information of the IAB-MT on a core network; or an ID of the IAB-node. The specific implementation form of the above ID information for indicating the IAB-node may be referred to the detailed description of any embodiment of the disclosure, which is not repeated here.

In the disclosure, before performing the IAB-node migration, the F1 terminating IAB-donor may determine the information of the migration that has been performed by the IAB-node, and when determining that the IAB-node has performed at least one partial migration, the first migration information associated with the IAB-node may be received from the IAB-node.

Optionally, the F1 terminating IAB-donor may receive the first migration information sent by the IAB-node through an F1 application protocol (AP) message. For example, the F1 terminating IAB-donor may receive the first migration information sent by the IAB-node through a gNB-DU configuration update message, or may also receive the first migration information through other F1 AP messages, which is not limited in this disclosure.

In this disclosure, the first migration information received by the F1 terminating IAB-donor may be actively sent by the IAB-node after performing at least one partial migration and before performing another migration. Alternatively, the F1 terminating IAB-donor sends a first migration information reporting instruction to the IAB-node after determining that at least one partial migration has been performed by the IAB-node, to request the migration information from the IAB-node, and then the IAB-node sends the first migration information, which is not limited in the disclosure.

At step 503, a target IAB-donor is determined according to information for indicating the target IAB-donor included in the first migration information.

At step 504, second migration information associated with the IAB-node is sent to the target IAB-donor, so that the target IAB-donor determines the IAB-node that needs to be migrated according to the second migration information.

In this disclosure, after determining the target IAB-donor, the F1 terminating IAB-donor may send the second migration information to the target IAB-donor, so as to indicate the target IAB-donor the IAB-node that need to be migrated.

Optionally, the second migration information may include ID information of an IAB-MT. The target IAB-donor may determine the IAB-node that needs to be migrated according to the ID information of the IAB-MT, and then complete the migration of the IAB-node. For example, the transport migration management (partial migration) of this IAB-node is performed between the target IAB-donor and the F1 terminating IAB-donor, or the UE migration (i.e., full migration) is performed between the target IAB-donor and the F1 terminating IAB-donor.

Optionally, the ID information of the IAB-MT includes at least one of: ID information of the IAB-MT on the target IAB-donor; a context ID of the IAB-MT; ID information of the IAB-MT on a core network; or an ID of the IAB-node. The specific implementation form of the above ID information indication the IAB-MT may be referred to the detailed description of any embodiment of the disclosure, which is not repeated here.

Optionally, the F1 terminating IAB-donor may send the second migration information to the target IAB-donor through an XnAP message. In some embodiments, the XnAP message may be an IAB transport migration management request for performing the partial migration. In other embodiments, the XnAP message may be a UE migration request for performing the full migration.

In the disclosure, the F1 terminating IAB-donor firstly determines the information of the migration that has been performed by the IAB-node, and then when determining that at least one partial migration has been performed by the IAB-node, the F1 terminating IAB-donor may receive the first migration information sent by the IAB-node. According to the first migration information, the target IAB-donor is determined, and then the second migration information is sent to the target IAB-donor, so that the target IAB-donor may determine the IAB-node to be migrated. The F1 terminating IAB-donor may determine the target IAB-donor to which the IAB-node is to be migrated by receiving the first migration information sent by the IAB-node, so as to reliably realize multiple continuous migrations of the IAB-node by performing the information interaction with the target IAB-donor.

FIG. 6 is a flowchart of a migration method according to an embodiment of the disclosure. The method is performed by a target IAB-donor. As illustrated in FIG. 6, the method may include, but is not limited to, the following steps.

At step 601, before performing an IAB-node migration, information of a migration that has been performed by an IAB-node is determined.

The specific implementation process of step 601 may be referred to the detailed description of any embodiment of the disclosure, which is not repeated here.

At step 602, in response to that the IAB-node has performed at least one partial migration, first migration information associated with the IAB-node sent by a source non-F1 terminating IAB-donor is received.

The source non-F1 terminating IAB-donor is a non-F1 terminating IAB-donor corresponding to the IAB-node after having performing at least one partial migration.

Optionally, the first migration information associated with the IAB-node may further include information for indicating an F1 terminating IAB-donor. The implementation form of the information for indicating the F1 terminating IAB-donor may refer to the detailed description of any embodiment of the disclosure, which is not repeated here..

Optionally, the first migration information associated with the IAB-node may further include ID information of an IAB-MT. The target IAB-donor may determine the IAB-node to be migrated according to the ID information of the IAB-MT, and then complete the migration of the IAB-node.

Optionally, the ID information of the IAB-MT includes at least one of: ID information of the IAB-MT on the target IAB-donor; a context ID of the IAB-MT; ID information of the IAB-MT on a core network; or an ID of the IAB-node. The specific implementation form of the above ID information of the IAB-MT may be referred to the detailed description of any embodiment of the disclosure, which is not repeated here.

Optionally, the first migration information may further include indication information for indicating that the first migration information is from the non-F1 terminating IAB-donor.

Optionally, the target IAB-donor may receive the first migration information sent by the source non-F1 terminating IAB-donor through an XnAP message.

At step 603, an F1 terminating IAB-donor is determined according to information for indicating the F1 terminating IAB-donor.

At step 604, third migration information associated with the IAB-node is sent to the F1 terminating IAB-donor, so that the F1 terminating IAB-donor determines the IAB-node that needs to be migrated according to the third migration information.

Optionally, the third migration information may include ID information of an IAB-MT. The ID information of the IAB-MT may include at least one of: ID information of the IAB-MT on the target IAB-donor; a context ID of the IAB-MT; ID information of the IAB-MT on a core network; or an ID of the IAB-node. The specific implementation form of the above ID information of the IAB-MT may be referred to the detailed description of any embodiment of the disclosure, which is not repeated here.

In this disclosure, after the target IAB-donor determines the F1 terminating IAB-donor, the target IAB-donor may send the third migration information to the F1 terminating IAB-donor to indicate the F1 terminating IAB-donor the IAB-node to be migrated. The F1 terminating IAB-donor may determine the IAB-node to be migrated according to the ID information of the IAB-MT, and complete the transport migration management (partial migration) of the IAB-node by performing the information interaction with the target IAB-donor, or perform the UE migration (i.e., full migration) with the F1 terminating IAB-donor.

Optionally, the target IAB-donor may send the third migration information to the F1 terminating IAB-donor through an XnAP message.

In the disclosure, before performing the IAB-node migration, the target IAB-donor first determines the information of the migration that has been performed by the IAB-node. When determining that at least one partial migration has been performed by the IAB-node, the target IAB-donor may receive the first migration information sent by the source non-F1 terminating IAB-donor, and then determine the F1 terminating IAB-donor according to the first migration information. The target IAB-donor then sends the third migration information to the F1 terminating IAB-donor, so that the F1 terminating IAB-donor may determine the IAB-node to be migrated. The target IAB-donor thus may determine the F1 terminating IAB-donor corresponding to the IAB-node through the first migration information sent by the source non-F1 terminating IAB-donor, thus realizing multiple continuous migrations of the IAB-node reliably by performing the information interaction with the F1 terminating IAB-donor.

FIG. 7 is a flowchart of a migration method according to an embodiment of the disclosure. The method is performed by an IAB-node. As illustrated in FIG. 7, the method may include, but is not limited to, the following steps.

At step 701, before performing a migration, information of a migration that has been performed is determined.

At step 702, in response to that at least one partial migration has been performed, first migration information is sent to an F1 terminating IAB-donor, to enable the F1 terminating IAB-donor to perform the IAB-node migration according to the first migration information.

In the disclosure, before performing the migration, the IAB-node may first determine the information of migration that has been performed, such as a type of migration that has been performed and/or a number of migrations. When it is determined that at least one partial migration has been performed, before performing another migration, it is necessary to ensure that information may be interacted between the target IAB-donor to be migrated and the current F1 terminating IAB-donor, so that the first migration information may be sent to the F1 terminating IAB-donor, to enable the F1 terminating IAB-donor to perform the IAB-node migration based on the first migration information.

Optionally, the first migration information includes at least one of: information for indicating a target IAB-donor, or ID information of an IAB-MT.

Optionally, the ID information of the IAB-MT includes at least one of: ID information of the IAB-MT on the F1 terminating IAB-donor; ID information of the IAB-MT on the target IAB-donor; a context ID of the IAB-MT; ID information of the IAB-MT on a core network; or an ID of the IAB-node.

The specific meaning and realizable form of the above information may refer to the detailed description of any embodiment of the disclosure, and will not be repeated here.

Optionally, the IAB-node may actively send the first migration information to the F1 terminating IAB-donor after performing at least one partial migration and before performing another migration. Alternatively, the first migration information may be sent to the F1 terminating IAB-donor after receiving an instruction to report the first migration information sent by the F1 terminating IAB-donor, which is not limited in this disclosure.

Optionally, the first migration information may be sent to the IAB-node by the source non-F1 terminating IAB-donor, or can also be sent to the IAB-node by the target IAB-donor.

The source non-F1 terminating IAB-donor is a non-F1 terminating IAB-donor corresponding to the IAB-node after performing at least one partial migration.

Optionally, the IAB-node may receive the first migration information sent by the source non-F1 terminating IAB-donor or the target IAB-donor through a radio resource control (RRC) message.

Optionally, the first migration information received by the IAB-node may be sent to the IAB-node by the source non-F1 terminating IAB-donor or the target IAB-donor actively. Alternatively, after performing at least one partial migration and before performing another migration, the first migration information may be obtained by the IAB-node by requesting from the source non-F1 terminating IAB-donor or the target IAB-donor, which is not limited in this disclosure.

In the disclosure, before performing the migration, the IAB-node first determines the information of the migration that has been performed by the IAB-node. When it is determined that at least one partial migration has been performed by the IAB-node, the first migration information is sent to the F1 terminating IAB-donor, so that the F1 terminating IAB-donor performs the information interaction with the target IAB-donor based on the first migration information, thus reliably realizing multiple continuous migrations of the IAB-node.

FIG. 8 is a flowchart of a migration method according to an embodiment of the disclosure. The method is performed by a source non-F1 terminating IAB-donor. As illustrated in FIG. 8, the method may include, but is not limited to, the following steps.

At step 801, before performing an IAB-node migration, information of a migration that has been performed by an IAB-node is determined.

The specific implementation process of step 801 may be referred to the detailed description of any embodiment of the disclosure, which is not repeated here.

At step 802, in response to that at least one partial migration has been performed by the IAB-node, first migration information is sent to a target IAB-donor, to enable the target IAB-donor to perform the IAB-node migration according to the first migration information.

Optionally, the first migration information includes at least one of: information for indicating an F1 terminating IAB-donor, ID information of an IAB-MT, and indication information for indicating that the first migration information is from a non-F1 terminating IAB-donor.

Optionally, the ID information of the IAB-MT includes at least one of: ID information of the IAB-MT on the F1 terminating IAB-donor; ID information of the IAB-MT on the target IAB-donor; a context ID of the IAB-MT; ID information of the IAB-MT on a core network; or an ID of the IAB-node.

In the disclosure, before performing the IAB-node migration, the source non-F1 terminating IAB-donor may first determine the information of the migration that has been performed by the IAB-node. When it is determined that at least one partial migration has been performed by the IAB-node, the information for indicating the F1 terminating IAB-donor corresponding to the IAB-node may be sent to the target IAB-donor, so that the target IAB-donor may determine the F1 terminating IAB-donor according to the information for indicating the F1 terminating IAB-donor, and then perform the information interaction with the F1 terminating IAB-donor to complete the migration of the IAB-node.

Optionally, the source non-F1 terminating IAB-donor may send the first migration information to the target IAB-donor through an XnAP message.

In this disclosure, before performing the IAB-node migration, the source non-F1 terminating IAB-donor may first determine the information of the migration that has been performed by the IAB-node. When it is determined that at least one partial migration has been performed by the IAB-node, the first migration information may be sent to the target IAB-donor, so that the target IAB-donor may determine the F1 terminating IAB-donor. Therefore, on the basis that at least one partial migration has been performed by the IAB-node, another migration of the IAB-node may be reliably realized.

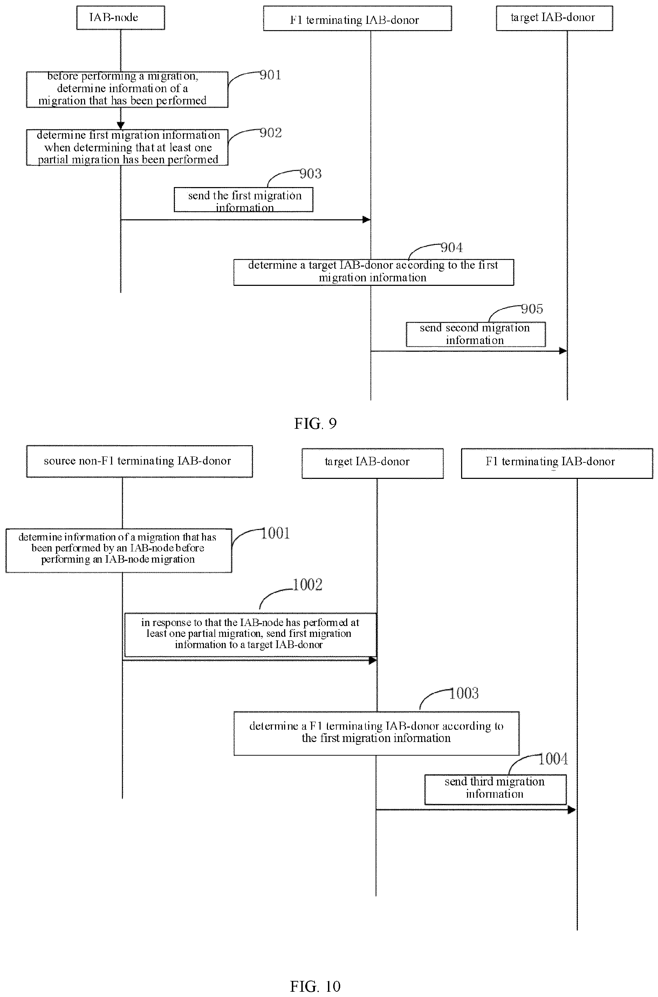

FIG. 9 is an interaction schematic diagram of a migration method according to an embodiment of the disclosure. As illustrated in FIG. 9, the method may include, but is not limited to, the following steps.

At step 901, before performing a migration, an IAB-node determines information of a migration that has been performed.

At step 902, the IAB-node determines first migration information when determining that at least one partial migration has been performed.

The IAB-node may receive the first migration information sent by a target IAB-donor or a source non-F1 terminating IAB-donor through a RRC message.

At step 903, the IAB-node sends the first migration information to an F1 terminating IAB-donor.

At step 904, the F1 terminating IAB-donor determines a target IAB-donor according to the first migration information.

At step 905, the F1 terminating IAB-donor sends second migration information to the target IAB-donor.

The specific implementations of the above steps may be referred to the detailed description of any embodiment of the disclosure, which will not be repeated here.

In this disclosure, after performing at least one partial migration, the IAB-node may send the first migration information to the F1 terminating IAB-donor before performing another migration, so that the F1 terminating IAB-donor may determine the target IAB-donor according to the first migration information, and then send the second migration information to the target IAB-donor, thus completing a partial migration or a full migration of the IAB-node.

FIG. 10 is an interaction schematic diagram of a migration method according to an embodiment of the disclosure. As illustrated in FIG. 10, the method may include, but is not limited to, the following steps.

At step 1001, a source non-F1 terminating IAB-donor determines information of a migration that has been performed by an IAB-node before performing an IAB-node migration.

At step 1002, in response to that the IAB-node has performed at least one partial migration, first migration information is sent to a target IAB-donor.

At step 1003, the target IAB-donor determines an F1 terminating IAB-donor according to the first migration information.

At step 1004, the target IAB-donor sends third migration information to the F1 terminating IAB-donor.

The specific implementations of the above steps may be referred to the detailed description of any embodiment of the disclosure, which will not be repeated here.

In this disclosure, the source non-F1 terminating IAB-donor first determines the information of the migration that has been performed before performing the IAB-node migration. After determining that at least one partial migration has been performed, the first migration information may be first sent to the target IAB-donor, so that the target IAB-donor may determine the F1 terminating IAB-donor according to the first migration information, and then sends the third migration information to the F1 terminating IAB-donor, thus completing a partial migration or a full migration of the IAB-node.

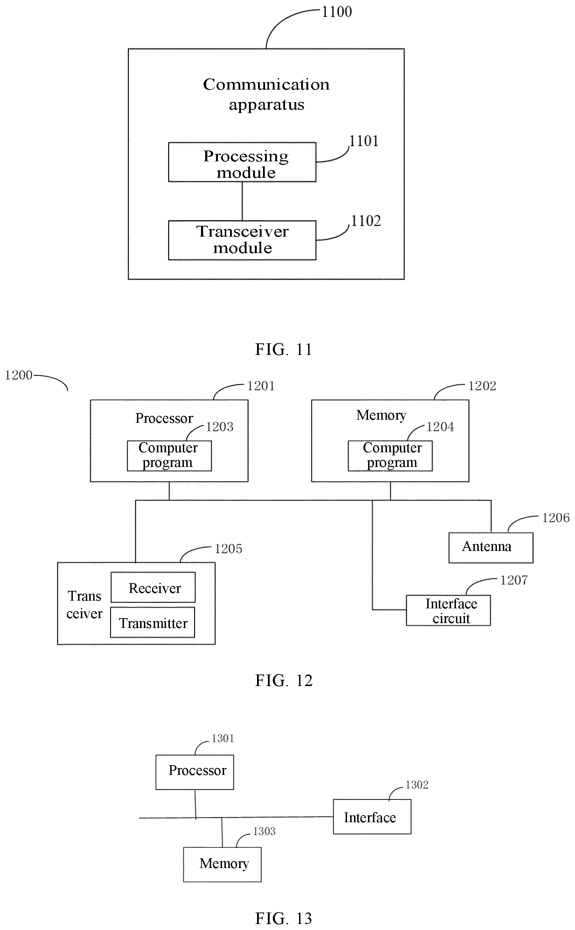

FIG. 11 is a schematic diagram of a communication apparatus according to an embodiment of the disclosure. The communication apparatus 1100 shown in FIG. 11 may include a processing module 1101 and a transceiver module 1102. The transceiver module 1102 may include a sending module and/or a receiving module. The sending module is configured for realizing a sending function, and the receiving module is configured for realizing a receiving function. The transceiver module 1102 may realize the sending function and/or the receiving function.

It is understood that the communication apparatus 1100 may be an IAB-donor, an apparatus in the IAB-donor, or an apparatus that may be used together with the IAB-donor.

When the communication apparatus 1100 is on the IAB-donor side,
the processing module is configured to, before performing an IAB-node migration, determine information of a migration that has been performed by an IAB-node,
the transceiver module 1102 is configured to, in response to that at least one partial migration has been performed by the IAB-node, obtain first migration information associated with the IAB-node, and
the processing module 1101 is further configured to perform the IAB-node migration according to the first migration information.

Optionally, the IAB-donor is an F1 terminating IAB-donor, the transceiver module 1102 is further configured to:
receive the first migration information associated with the IAB-node sent by the IAB-node.

Optionally, the first migration information includes at least one of:
information for indicating a target IAB-donor, or ID information of an IAB-MT.

Optionally, the transceiver module 1102 is configured to send second migration information associated with the IAB-node to the target IAB-donor, to enable the target IAB-donor to determine the IAB-node that needs to be migrated according to the second migration information.

Optionally, the processing module 1101 is further configured to determine the target IAB-donor according to target IAB-donor indication information included in the first migration information.

Optionally, the second migration information includes the ID information of the IAB-MT.

Optionally, the IAB-donor is a target IAB-donor, the transceiver module 1102 is configured to receive the first migration information associated with the IAB-node sent by a source non-F1 terminating IAB-donor.

Optionally, the first migration information includes at least one of:
information for indicating an F1 terminating IAB-donor, ID information of an IAB-MT, and indication information for indicating that the first migration information is from a non-F1 terminating IAB-donor.

Optionally, the transceiver module 1102 is configured to send third migration information associated with the IAB-node to the F1 terminating IAB-donor, s to enable the F1 terminating IAB-donor to determine the IAB-node that needs to be migrated according to the third migration information.

Optionally, the processing module 1101 is further configured to determine the F1 terminating IAB-donor according to the information for indicating the F1 terminating IAB-donor.

Optionally, the third migration information includes the ID information of the IAB-MT.

Optionally, the information for indicating the target IAB-donor or the information for indicating the F1 terminating IAB-donor includes a NG-RAN node ID, a cell ID and/or address information of a transmit network.

Optionally, the ID information of the IAB-MT includes at least one of:
ID information of the IAB-MT on the F1 terminating IAB-donor;
ID information of the IAB-MT on the target IAB-donor;
a context ID of the IAB-MT;
ID information of the IAB-MT on a core network; or
an ID of the IAB-node.

Or, the communication apparatus 1100 is on the IAB-node side,
the processing module 1101 is configured to, before performing an IAB-node migration, determine information of a migration that has been performed by the IAB-node; and
the transceiver module 1102 is configured to, in response to that at least one partial migration has been performed, send first migration information to an F1 terminating IAB-donor, to enable the F1 terminating IAB-donor to perform the IAB-node migration according to the first migration information.

Optionally, the first migration information includes at least one of:
information for indicating a target IAB-donor, or ID information of an IAB-MT.

Optionally, the transceiver module 1102 is further configured to:
receive the first migration information sent by a source non-F1 terminating IAB-donor; or,
receive the first migration information sent by the target IAB-donor.

Or, the communication apparatus 1100 is on the source non-F1 terminating IAB-donor,
the processing module 1101 is configured to, before performing an IAB-node migration, determine information of a migration that has been performed by an IAB-node; and
the transceiver module 1102 is configured to, in response to that the IAB-node has performed at least one partial migration, send first migration information to a target IAB-donor, to enable the target IAB-donor to perform the IAB-node migration according to the first migration information.

Optionally, the first migration information includes at least one of:
information for indicating an F1 terminating IAB-donor, ID information of an IAB-MT and indication information for indicating that the first migration information is from a non-F1 terminating IAB-donor.

Optionally, the ID information of the IAB-MT includes at least one of:
ID information of the IAB-MT on the F1 terminating IAB-donor;
ID information of the IAB-MT on the target IAB-donor;
a context ID of the IAB-MT;
ID information of the IAB-MT on a core network; or
an ID of the IAB-node.

In the disclosure, the communication apparatus synchronizes the first migration information of the IAB-node before another IAB-node migration, so that the information interaction may be achieved between the F1 terminating IAB-donor and the target IAB-donor based on the first migration information, thereby reliably realizing multiple continuous migrations of the IAB-node.

As illustrated in FIG. 12, FIG. 12 is a schematic diagram illustrating a communication apparatus 1200 according to an embodiment of the disclosure. The communication apparatus 1200 may be an IAB-donor, or a chip, a chip system or a processor that supports the IAB-donor to realize the above-described methods. It may also be an IAB-node, or a chip, a chip system or a processor that supports the IAB-node to realize the above-described methods. The apparatus may be configured to realize the methods described in the above method embodiments with reference to the descriptions of the above-described method embodiments.

The communication apparatus 1200 may include one or more processors 1201. The processor 1201 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU, or CU), executing computer programs, and processing data of the computer programs.

Optionally, the communication apparatus 1200 may include one or more memories 1202 on which computer programs 1204 may be stored. The processor 1201 executes the computer programs 1204 to cause the communication apparatus 1200 to perform the methods described in the above method embodiments. Optionally, data may also be stored in the memory 1202. The communication apparatus 1200 and the memory 1202 may be provided separately or may be integrated together.

Optionally, the communication apparatus 1200 may also include a transceiver 1205 and an antenna 1206. The transceiver 1205 may be referred to as transceiver unit, transceiver machine, or transceiver circuit, for realizing the transceiver function. The transceiver 1205 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1200 may also include one or more interface circuits 1207. The interface circuits 1207 are used to receive code instructions and transmit them to the processor 1201. The processor 1201 runs the code instructions to cause the communication apparatus 1200 to perform the method described in the method embodiments.

If the communication apparatus 1200 is an IAB-donor, the transceiver 1205 is used to perform the transceiving steps in FIGS. 4-6, and the processor 1201 is used to perform the processing steps in FIGS. 4-6.

If the communication apparatus 1200 is an IAB-node, the transceiver 1205 is used to perform the transceiving step in FIG. 7, and the processor 1201 is used to perform the processing step in FIG. 7.

In an implementation, the processor 1201 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1201 may store a computer program 1203, which runs on the processor 1201 to cause the communication apparatus 1200 to perform the methods described in the method embodiments above. The computer program 1203 may be solidified in the processor 1201, in which case, the processor 1201 may be implemented by hardware.

In an implementation, the communication apparatus 1200 may include circuits. The circuits may implement the sending, receiving or communicating function in the above method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the descriptions of the above embodiments may be a network device or an intelligent relay, but the scope of the communication apparatus described in the disclosure is not limited thereto, and the structure of the communication apparatus may not be limited by FIG. 12. The communication apparatus may be a stand-alone device or may be part of a larger device. For example the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication apparatus may be a chip or a chip system is described with reference to the schematic structure of the chip shown in FIG. 13. The chip shown in FIG. 13 includes a processor 1301 and an interface 1302. There may be one or more processors 1301, and there may be a plurality of interfaces 1302.

The chip is used to implement the function of the terminal in the embodiment of the disclosure.

Optionally, the chip further includes a memory 1303 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or wirelessly (e.g., by using infrared wave, wireless wave, or microwave). The computer-readable storage medium may be any usable medium to which the computer has access to or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure or to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of this type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. When configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A migration method, performed by an integrated access and backhaul (IAB)-donor, comprising:
before performing an IAB-node migration, determining information of a migration that has been performed by an IAB-node;
in response to that the IAB-node has performed at least one partial migration, obtaining first migration information associated with the IAB-node; and
performing the IAB-node migration according to the first migration information.

2. The method of claim 1, wherein obtaining the first migration information associated with the IAB-node, comprises:
receiving, by an F1 terminating IAB-donor, the first migration information associated with the IAB-node sent by the IAB-node.

3. The method of claim 2, wherein the first migration information comprises at least one of:
information for indicating a target IAB-donor; or
identification (ID) information of an IAB-mobile terminal (MT).

4. The method of claim 3, further comprising:
sending, by the F1 terminating IAB-donor, second migration information associated with the IAB-node to the target IAB-donor, to enable the target IAB-donor to determine the IAB-node that needs to be migrated according to the second migration information.

5. The method of claim 4, further comprising:
determining the target IAB-donor according to the information for indicating the target IAB-donor comprised in the first migration information.

6. The method of claim 4, wherein the second migration information comprises the ID information of the IAB-MT.

7. The method of claim 1, wherein obtaining the first migration information associated with the IAB-node, comprises:
receiving, by a target IAB-donor, the first migration information associated with the IAB-node sent by a source non-F1 terminating IAB-donor.

8. The method of claim 7, wherein the first migration information comprises at least one of:
information for indicating an F1 terminating IAB-donor, ID information of an IAB-MT, and indication information for indicating that the first migration information is from a non-F1 terminating IAB-donor.

9. The method of claim 8, further comprising:
sending, by the target IAB-donor, third migration information associated with the IAB-node to the F1 terminating IAB-donor, to enable the F1 terminating IAB-donor to determine the IAB-node that needs to be migrated according to the third migration information.

10. The method of claim 9, further comprising:
determining, by the target IAB-donor, the F1 terminating IAB-donor according to the information for indicating the F1 terminating IAB-donor.

11. The method of claim 10, wherein the third migration information comprises the ID information of the IAB-MT.

12. The method of claim 3 or 8, wherein the information for indicating the target IAB-donor or the information for indicating the F1 terminating IAB-donor comprises a next generation radio access network (NG-RAN) node ID, a cell ID and/or address information of a transmit network.

13. The method of claim 12, wherein the ID information of the IAB-MT comprises at least one of:
ID information of the IAB-MT on the F1 terminating IAB-donor;
ID information of the IAB-MT on the target IAB-donor;
a context ID of the IAB-MT;
ID information of the IAB-MT on a core network; or
an ID of the IAB-node.

14. A migration method, performed by an integrated access and backhaul (IAB)-node, comprising:
before performing an IAB-node migration, determining information of a migration that has been performed by the IAB-node; and
in response to that at least one partial migration has been performed, sending first migration information to an F1 terminating IAB-donor, to enable the F1 terminating IAB-donor to perform the IAB-node migration according to the first migration information.

15. The method of claim 14, wherein the first migration information comprises at least one of:
information for indicating a target IAB-donor; or
identification (ID) information of an IAB-mobile terminal (MT).

16. The method of claim 15, further comprising:
receiving the first migration information sent by a source non-F1 terminating IAB-donor; or,
receiving the first migration information sent by the target IAB-donor.

17. The method of claim 14 or 16, wherein the ID information of the IAB-MT comprises at least one of:
ID information of the IAB-MT on the F1 terminating IAB-donor;
ID information of the IAB-MT on the target IAB-donor;
a context ID of the IAB-MT;
ID information of the IAB-MT on a core network; or
an ID of the IAB-node.

18. A migration method, performed by a source non-F1 terminating integrated access and backhaul (IAB)-donor, comprising:
before performing an IAB-node migration, determining information of a migration that has been performed by an IAB-node; and
in response to that the IAB-node has performed at least one partial migration, sending first migration information to a target IAB-donor, to enable the target IAB-donor to perform the IAB-node migration according to the first migration information.

19. The method of claim 18, wherein the first migration information comprises at least one of:
information for indicating an F1 terminating IAB-donor, ID information of an IAB-mobile terminal (MT) and indication information for indicating that the first migration information is from a non-F1 terminating IAB-donor.

20. The method of claim 19, wherein the ID information of the IAB-MT comprises at least one of:
ID information of the IAB-MT on the F1 terminating IAB-donor;
ID information of the IAB-MT on the target IAB-donor;
ID information of the IAB-MT on a core network; or
an ID of the IAB-node.

21. An integrated access and backhaul (IAB)-donor, comprising:
a processing module, configured to, before performing an IAB-node migration, determine information of a migration that has been performed by an IAB-node; and
a transceiver module, configured to, in response to that the IAB-node has performed at least one partial migration, obtain first migration information associated with the IAB-node;
wherein the processing module is further configured to perform the IAB-node migration according to the first migration information.

22. An integrated access and backhaul (IAB)-node, comprising:
a processing module, configured to, before performing an IAB-node migration, determine information of a migration that has been performed; and
a transceiver module, configured to, in response to that at least one partial migration has been performed, send first migration information to an F1 terminating IAB-donor, to enable the F1 terminating IAB-donor to perform the IAB-node migration according to the first migration information.

23. A source non-F1 terminating integrated access and backhaul (IAB)-donor, comprising:
a processing module, configured to, before performing an IAB-node migration, determine information of a migration that has been performed by an IAB-node; and
a transceiver module, configured to, in response to that the IAB-node has performed at least one partial migration, send first migration information to a target IAB-donor, to enable the target IAB-donor to perform the IAB-node migration according to the first migration information.

24. A communication system, comprising: an integrated access and backhaul (IAB)-donor, an IAB-node and a source non-F1 terminating IAB-donor, wherein the IAB-donor is configured for executing the method according to any one of claims 1-13, and the IAB-node is configured for executing the method according to any one of claims 14-17, and the source non-F1 terminating IAB-donor is configured for executing the method according to any one of claims 18-20.

25. A communication apparatus, comprising a processor and a memory, wherein the memory stores a computer program, and the processor executes the computer program stored in the memory to cause the apparatus to execute the method according to any one of claims 1-13, or the method according to any one of claims 14-17, or the method according to any one of claims 18-20.

26. A computer-readable storage medium for storing instructions, wherein when the instructions are executed, the method of any one of claims 1-13, or the method of any one of claims 14-17, or the method of any one of claims 18-20 is implemented.
